# EUROPÄISCHE PATENTANMELDUNG

(11) **EP 4 129 744 A1**
(43) Veröffentlichungstag der Anmeldung: **08.02.2023**
(21) Anmeldenummer: 22187457.1
(22) Anmeldetag: 28.07.2022
(51) Int. Cl.: B60L 3/00, B60L 9/16

(54) **ANTRIEBSSYSTEM FÜR EIN SCHIENENFAHRZEUG**

(30) Priorität: 03.08.2021 DE 102021208388
(71) Anmelder: Siemens Mobility GmbH, 81739 München (DE)
(72) Erfinder: Brand, Jens, 90459 Nürnberg (DE); Körner, Olaf, 90469 Nürnberg (DE); Sperova, Alice, 90537 Feucht (DE)

(57) **Zusammenfassung**

Ein erfindungsgemäßes Antriebssystem eines Schienenfahrzeugs weist zumindest eine Mehrzahl Stromrichter zum Speisen einer jeweiligen Anzahl Antriebsmotoren mit elektrischer Energie, eine Mehrzahl Antriebsmotoren zum Antreiben einer jeweiligen Radsatzwelle, wobei die Antriebsmotoren ausschließlich als durchzugsbelüftete permanentmagneterregte Antriebsmotoren ausgestaltet sind, schaltbare Kupplungen, wobei zwischen jedem Antriebsmotor und der von diesem angetriebenen Radsatzwelle zumindest eine Kupplung angeordnet ist, und eine Steuereinrichtung zum Steuern zumindest der Kupplungen auf.

## Beschreibung

Die Erfindung betrifft ein Antriebssystem für ein Schienenfahrzeug, ein Verfahren zur Steuerung eines derartigen Antriebssystems sowie ein Schienenfahrzeug mit zumindest einem derartigen Antriebssystem.

Antriebssysteme von Schienenfahrzeugen müssen verschiedenste Anforderungen erfüllen. Neben einem zuverlässigen Betrieb über die typische Einsatzzeit des Schienenfahrzeugs von bis zu über dreißig Jahre werden zunehmend höhere Anforderungen an ein geringes Gewicht sowie eine hohe Energieeffizienz gestellt, um einerseits die mechanische Belastung des Schienennetzes zu verringern und andererseits den Energieverbrauch des Schienenfahrzeugs zu reduzieren.

Neben technologischen Fortschritten auf dem Gebiet der Ansteuerung von Antriebsmotoren des Schienenfahrzeugs, beispielsweise durch Einsatz von Hochspannungs-Halbleiterschaltern auf Basis von Siliziumcarbid (SiC) in den die Antriebsmotoren speisenden Stromrichtern werden zunehmend permanentmagneterregte Drehstrom-Synchronmaschinen als Antriebsmotoren eingesetzt, welche gegenüber Drehstrom-Asynchronmaschinen insbesondere aufgrund einer Reduktion von Rotorverlusten einen höheren Wirkungsgrad erzielen und damit energieeffizienter betrieben werden können.

Der Einsatz permanentmagneterregter Antriebsmotoren mit dem Ziel einer höheren Energieeffizienz des Antriebssystems eines Schienenfahrzeugs ist beispielsweise bereits in der europäischen Patentanmeldung EP 3 564 088 A1 beschrieben. In dem darin offenbarten Antriebssystem ist ein Teil der Gesamtzahl Antriebsmotoren als permanentmagneterregte Synchronmotoren ausgestaltet, während der andere Teil Antriebsmotoren als Asynchronmotor und/oder Reluktanzmotor ausgestaltet ist. Der Einsatz unterschiedlicher Motortypen ist dabei dadurch begründet, dass bei permanentmagneterregten Antriebsmotoren aufgrund der Permanentmagnete in dem Rotor die Erregung nicht mittels beispielsweise einer Taktsperre des den Antriebsmotor speisenden Stromrichters abgeschaltet werden kann, wie es bei Asynchronmotoren bzw. Reluktanzmotoren möglich ist. Vielmehr führt ein Mitlaufen des Radsatzes aufgrund der bei Schienenfahrzeugen üblichen kraftschlüssigen bzw. formschlüssigen Verbindung der Radsatzwelle mit der Motorwelle und damit erzwungenen Drehung des Rotors dazu, dass der rotierende Permanentmagnetfluss weiterhin Wirbelstrom- und Hysterese-Verluste hervorruft.

Die Asynchron- bzw. Reluktanzmotoren dienen nach der europäischen Patentanmeldung EP 3 564 088 A1 entsprechend dazu, in bestimmten Phasen einer Fahrt des Schienenfahrzeugs, in denen eine geringere als die von der Gesamtzahl Antriebsmotoren bereitgestellte Gesamtantriebsleistung benötigt wird, mittels einer Taktsperre des speisenden Stromrichters nahezu verlustfrei abgeschaltet werden zu können. Hierdurch wird ein Teillastbetrieb dieser Antriebsmotoren vermieden, welcher gegenüber permanentmagneterregten Antriebsmotoren verlustbehafteter und damit weniger energieeffizient ist, während die permanentmagneterregten Antriebsmotoren mit einer höheren Last und damit einem höheren Wirkungsgrad betrieben werden können, sodass die Energieeffizienz des Antriebssystems während des Betriebs des Schienenfahrzeugs insgesamt erhöht wird.

Die verschiedenen Bewegungsphasen, welche während des Betriebs eines Schienenfahrzeugs auf einer zu befahrenden Strecke zwischen beispielsweise zwei Haltestationen auftreten, werden nach der europäischen Patentanmeldung EP 3 564 088 A1 in die vier Bewegungsphasen Beschleunigen, Beharren, Rollen bzw. Auslauf, und Bremsen bzw. Verzögern unterteilt. Das Zusammenspiel dieser Phasen auf der Strecke wird auch als Fahrspiel bezeichnet. Für die Beschleunigungsphase, welche typischerweise einem Halt des

Schienenfahrzeugs an einer Haltestation folgt, werden üblicherweise alle Antriebsmotoren des Schienenfahrzeugs verwendet, um das Schienenfahrzeug mittels einer hohen Zugkraft auf eine bestimmte Geschwindigkeit zu beschleunigen. In einer typischerweise nachfolgenden Beharrungsphase wird die Zugkraft soweit reduziert, dass sie der Fahrwiderstandskraft entspricht, wodurch die erreichte Fahrgeschwindigkeit konstant gehalten wird. In Annäherung an die Haltestation für den nächsten Halt wird die Zugkraft soweit, gegebenenfalls bis auf null, reduziert, dass das Schienenfahrzeug in eine Rollphase übergeht, in welcher sich die Fahrgeschwindigkeit durch die dann gegenüber der Zugkraft größere Fahrwiderstandskraft verringert. Vor Erreichen der Haltestation geht die Rollphase dann in eine Bremsphase über, in welcher zusätzliche Bremskräfte zur weiteren Reduzierung der Fahrgeschwindigkeit eingesetzt werden. Die zusätzliche Bremskraft wird dabei vorzugsweise durch einen Betrieb von Antriebsmotoren als Generatoren, üblicherweise als regeneratives Bremsen bezeichnet, sowie gegebenenfalls durch Einsatz von auf Radsatzwellen oder an diesen jeweils angeordnete Räder wirkende Reibungsbremsen erzeugt. Speziell in den Phasen des Beharrens und des Rollens werden üblicherweise nur zwischen null bis fünfzig Prozentpunkte der verfügbaren Gesamtantriebsleistung des Schienenfahrzeugs benötigt. In diesen Phasen kann ein Teil der Antriebsmotoren, welche nicht als permanentmagneterregte Synchronmotoren ausgestaltet sind, abgeschaltet werden, wodurch deren Teillastbetrieb weitgehend vermieden und damit die Energieeffizienz des gesamten Antriebssystems gesteigert werden kann.

Auch die deutsche Offenlegungsschrift DE 10 2015 215 576 A1 befasst sich mit dem Einsatz von permanentmagneterregten Antriebsmotoren in einem Antriebssystem eines Schienenfahrzeugs. Dabei wird besonders die Situation eines Ausfalls des den Antriebsmotor speisenden Stromrichters betrachtet. In dieser Situation wird der Antriebsmotor aufgrund der vorstehend bereits beschriebenen Nicht-Abschaltbarkeit der Erregung sowie des Mitlaufens der Radsatzwelle als Generator betrieben, dessen erzeugte elektrische Energie in den defekten Stromrichter gespeist wird und in diesem sowie in dem Antriebsmotor selbst Schaden verursachen kann. Als Alternative zu der als bekannt beschriebenen Möglichkeit, eine Rückspeisung elektrischer Energie in den Stromrichter durch Unterbrechung der elektrischen Verbindung zwischen dem Antriebsmotor und dem Stromrichter mittels Schaltschützen zu verhindern, ist eine schaltbare Kupplung zwischen der Motorwelle und der Radsatzwelle vorgesehen, welche im Fehlerfall den Antriebsmotor mechanisch abtrennt, wodurch dieser zum Stillstand kommt und keine elektrische Energie mehr erzeugt. Die schaltbare Kupplung ist dabei als eine elektromagnetisch wirkende Lamellenkupplung oder als eine elektromagnetisch geschaltete Zahnkupplung ausgestaltet, welche beispielsweise zwischen der Motorwelle und einer Bogenzahnkupplung angeordnet ist.

Aufgabe der Erfindung ist es, ein Antriebssystem für ein Schienenfahrzeug anzugeben, welches einen sicheren und energieeffizienten Betrieb ausschließlich permanentmagneterregter Antriebsmotoren in einem Schienenfahrzeug ermöglicht.

Diese Aufgabe wird durch das Antriebssystem für ein Schienenfahrzeug, ein Verfahren zur Steuerung eines solchen Antriebssystems sowie durch ein Schienenfahrzeug gemäß den jeweiligen Merkmalen der unabhängigen Patentansprüche gelöst. Weiterbildungen sind in jeweiligen abhängigen Patentansprüchen aufgeführt.

Ein erfindungsgemäßes Antriebssystem eines Schienenfahrzeugs weist zumindest eine Mehrzahl Stromrichter zum Speisen einer jeweiligen Anzahl Antriebsmotoren mit elektrischer Energie, eine Mehrzahl Antriebsmotoren zum Antreiben einer jeweiligen Radsatzwelle, wobei die Antriebsmotoren ausschließlich als durchzugsbelüftete permanentmagneterregte Antriebsmotoren ausgestaltet sind, schaltbare Kupplungen, wobei zwischen jedem Antriebsmotor und der von diesem angetriebenen Radsatzwelle zumindest eine Kupplung angeordnet ist, und eine Steuereinrichtung zum Steuern zumindest der Kupplungen auf.

Wie einleitend beschrieben, kann die Effizienz des Antriebssystems eines Schienenfahrzeugs durch Einsatz ausschließlich permanentmagneterregter Antriebsmotoren insbesondere bei Betrieb des Antriebssystems in einem Teillastbereich, wie er beispielsweise in der Bewegungsphase des Beharrens auftritt, gegenüber einem ausschließlichen oder teilweisen Einsatz von Asynchronmotoren vorteilhaft erhöht werden. Erfindungsgemäß wird eine weitere Erhöhung der Effizienz des Antriebssystems ergänzend dadurch erzielt, dass die Antriebsmotoren durchzugsbelüftet ausgestaltet sind.

Eine Durchzugsbelüftung des Antriebsmotors bedeutet dabei, dass das Motorgehäuse eine Anzahl Öffnungen aufweist, über welche ein Kühlluftstrom aus der Umgebung des Motorgehäuses, so genannte Außenluft, dem Gehäuseinneren zugeführt und aus diesem wieder an die Umgebung abgeführt werden kann. Das Motorgehäuse umschließt dabei beispielsweise das gesamte Statorblechpaket, wobei alternativ insbesondere eine radiale Außenseite des Statorblechpakets oder Teilbereiche der radialen Außenseite als integrale Bestandteile des Motorgehäuse ausgestaltet sein können. Eine Zufuhr der Kühlluft erfolgt beispielsweise über eine oder mehrere Öffnungen im Bereich einer Stirnseite des Motorgehäuses und eine Abfuhr der Kühlluft aus dem Motorgehäuse über eine oder mehrere Öffnungen im Bereich einer axial gegenüberliegenden weiteren Stirnseite des Motorgehäuses, wobei die Kühlluft innerhalb des Motorgehäuses durch über den Umfang des Statorblechpakets verteilt angeordnete axiale Kühlluftkanäle und gegebenenfalls ergänzend durch ebenso über den Umfang verteilt angeordnete Kühlluftkanäle in dem Rotor geführt wird. Ferner können ergänzend die Wickelköpfe der Statorwicklung, welche in axialer Richtung beidseitig aus dem Statorblechpaket herausragen, mittels der Kühlluft direkt gekühlt und damit Stromwärmeverluste abgeführt werden.

Die Durchzugsbelüftung kann eigenbelüftet oder fremdbelüftet ausgestaltet sein, wobei bei einer Eigenbelüftung der Kühlluftstrom mittels beispielsweise eines sich mit der Motorwelle drehenden Lüfterrads erzeugt wird, während bei einer Fremdbelüftung beispielsweise ein außerhalb des Antriebsmotors angeordneter Lüfter Kühlluft dem Motorgehäuse zuführt bzw. aus diesem abführt. Eine Fremdbelüftung ermöglicht mittels einer gesonderten Versorgung und Ansteuerung des Lüfters, wodurch die Kühlluftzufuhr unabhängig von der Motordrehzahl gesteuert werden kann. Eine Eigenbelüftung erfordert hingegen keinen gesondert zu versorgenden und steuernden elektrischen Lüfter, wodurch eine höhere Zuverlässigkeit erzielt werden kann.

Die erfindungsgemäße Durchzugsbelüftung zur Kühlung magnetisch aktiver Teile der permanentmagneterregten Antriebsmotoren ermöglicht vorteilhaft eine höhere Effizienz gegenüber entsprechenden gekapselten Antriebsmotoren.

Bei einem gekapselten Antriebsmotor sind sowohl das Statorblechpaket als auch der Rotor von einem geschlossenen Motorgehäuse umgeben. Eine Kühlung des Stators sowie gegebenenfalls des Rotors erfolgt durch Umwälzung eines Kühlmittels, üblicherweise Luft, in einem geschlossenen Kühlkreislauf innerhalb des Gehäuses. Die Umwälzung des Kühlmittels erfolgt dabei mittels eines in dem geschlossenen Motorgehäuse angeordneten und sich mit der Motorwelle drehenden Lüfterrads. Für eine Rückkühlung des erwärmten Kühlmittels können im Bereich der radialen Außenseite des geschlossenen Gehäuses beispielsweise Kühlluftkanäle vorgesehen sein, durch welche aus der Umgebung des Motorgehäuses zugeführte Kühlluft strömt. Hierfür kann ein weiteres, außerhalb des Gehäuses angeordnetes und sich ebenfalls mit der Motorwelle drehendes Lüfterrad vorgesehen sein, sodass der Antriebsmotor wiederum eigenbelüftet ausgestaltet ist. Alternativ kann im Bereich der radialen Außenseite des geschlossenen Gehäuses beispielsweise ein Kühlmantel eines weiteren geschlossenen Kühlkreislaufs vorgesehen sein, in welchem Kühlwasser als Kühlmittel zirkuliert, welches über einen außerhalb des Motorgehäuses angeordneten und von Umgebungsluft durchströmten Wasser/Luft-Wärmetauscher rückgekühlt wird.

Die Abfuhr von Verlustwärme, welche hauptsächlich Stromwärmeverluste in der Statorwicklung sowie Wirbel- und Hystereseverluste im Eisen des Statorblechpakets umfasst, erfordert bei einem gekapselten Antriebsmotors eine höhere Temperaturdifferenz gegenüber einem durchzugsbelüfteten Antriebsmotor. Bei Abfuhr einer gleichen Verlustleistung würde diese Temperaturdifferenz bei einem gekapselten Antriebsmotor nachteilig zu einer höheren Temperatur der magnetisch aktiven Teile des Antriebsmotors führen, wodurch einerseits der Kupferwiderstand der Statorwicklung und somit die Stromwärmeverluste ansteigen sowie die Isolation der Statorwicklung stärker beansprucht würde, sowie andererseits die Remanenz der Permanentmagnete in dem Rotor abnehmen würde. Derartige auch die Zuverlässigkeit des Antriebsmotors beeinträchtigenden Auswirkungen werden bei einem gekapselten Antriebsmotor üblicherweise mittels einer Verringerung der Leistungsdichte des Antriebsmotors kompensiert, welche jedoch nachteilig mit einer größeren Masse und Volumen sowie höheren Kosten einhergeht.

Eine Kapselung permanentmagneterregter Antriebsmotoren von Schienenfahrzeugen war bislang notwendig, um ein Austreten brennbarer Gase oder Flammen aus dem Motorgehäuse in einem Fehlerfall zu verhindern und damit sowohl den sicheren Betrieb des Schienenfahrzeugs in einem Fehlerfall als auch einen Schutz der Umgebung, insbesondere von Personen innerhalb und außerhalb des Schienenfahrzeugs, zu gewährleisten. Ursache für das Entstehen von derartigen Gasen oder Flammen in dem Antriebsmotor ist beispielsweise ein Kurzschluss in der Statorwicklung. Die Detektion eines solchen Kurzschlusses führt bislang beispielsweise dazu, dass entsprechend der einleitend genannten deutschen Offenlegungsschrift DE 10 2015 215 576 A1 Schaltschütze in der elektrischen Verbindung zwischen dem betroffenen Antriebsmotor und dem diesen speisenden Stromrichter geöffnet werden und dadurch der Stromrichter geschützt bzw. dessen mögliche Beschädigung aufgrund des Kurzschlüsse verhindert wird. Das, sofern das Schienenfahrzeug bei einem solchen Fehlerfall nicht zum Stillstand gebracht wird, fortgesetzte Mitlaufen der Radsatzwelle und damit das aufgrund einer kraftschlüssigen bzw. formschlüssigen Verbindung zwischen Radsatzwelle und Motorwelle fortgesetzte Rotieren des Rotors führt jedoch dazu, dass weiterhin Ströme in der Statorwicklung und insbesondere in die Kurzschlussstelle fließen. Solche Ströme können Lichtbögen sowie hohe lokale Wärmeverluste verursachen, welche die Isolation der Statorwicklung zerstören bzw. das Material der Isolation in brennbare Gase wandeln, welche sich durch Lichtbögen entzünden und zu Flammen führen können.

Erfindungsgemäß wird das Entstehen von Gasen oder Flammen bei Detektion eines Fehlerfalls in einem der Antriebsmotoren des Schienenfahrzeugs hingegen mittels der zumindest einen schaltbaren Kupplung zwischen dem betroffenen Antriebsmotor und der von diesem angetriebenen Radsatzwelle verhindert und damit ein Schutz sowohl des Antriebsmotors vor einer möglichen Zerstörung als auch ein Schutz der Umgebung verwirklicht. Dabei bewirkt ein Schalten bzw. Öffnen der zumindest einen Schaltkupplung des betroffenen Antriebsmotors, dass sich die Radsatzwelle zwar aufgrund eines Mitlaufens der Räder weiterdreht, die Motorwelle und damit der Rotor hingegen aufgrund der Auftrennung der mechanischen Verbindung zu der Radsatzwelle zum Stillstand kommt, sodass ein Stromfluss in der Statorwicklung unterbunden wird.

Vorzugsweise wird bei Detektion eines Fehlerfalls in dem Antriebsmotor ergänzend auch eine Speisung des betroffenen

Antriebsmotors durch den Stromrichter unterbunden, sodass auch von Seiten des Stromrichters keine Ströme mehr in die Statorwicklung dieses Antriebsmotors fließen. Hierzu wird der Stromrichter insbesondere von der Steuereinrichtung nicht mehr angesteuert bzw. Leistungshalbleiterschalter des Stromrichters mittels einer so genannten Taktsperre gesperrt, sodass diese beispielsweise keine Wandlung von Gleichstrom in einen dreiphasigen Wechselstrom variabler Spannung und Frequenz durchführen, mit welchem die Statorwicklung des Drehstrom-Antriebsmotors gespeist wird. Von einem ergänzenden Einsatz von Schaltschützen zwischen dem Stromrichter und dem jeweiligen Antriebsmotor, wie sie in der einleitend genannten deutschen Offenlegungsschrift DE 10 2015 215 576 A1 beschrieben sind, kann somit vorteilhaft abgesehen werden.

Da der Schutz sowohl der Antriebsmotoren als auch der Schutz der Umgebung somit durch schaltbare Kupplungen gewährleistet werden kann, können die permanentmagneterregten Antriebsmotoren durchzugsbelüftet ausgestaltet werden, wodurch, wie vorstehend beschrieben, vorteilhaft eine höhere Effizienz der Antriebsmotoren im Vergleich zu den bislang eingesetzten gekapselt ausgestalteten Antriebsmotoren erzielt wird. Insbesondere kann durch eine geringere Temperatur der Statorwicklung und damit einhergehende geringere Stromwärmeverluste der Wirkungsgrad des Antriebsmotors gesteigert werden. Zudem können Permanentmagnete mit einer geringeren Temperaturfestigkeit sowie einer niedrigerem Koerzitivfeldstärke sowie einer erhöhten Remanenz eingesetzt werden, was insbesondere zu einer geringeren magnetischen Flussänderung führt.

Um ein Schalten bzw. Öffnen der Kupplungen auch während eines Fahrbetriebs des Schienenfahrzeugs, d.h. während sich Radsatzwellen und Motorwellen drehen sowie gegebenenfalls ein Drehmoment übertragen, zu ermöglichen, können die Kupplungen beispielsweise als Lamellenkupplungen oder Zahnkupplungen ausgestaltet sein, welche mittels elektromagnetisch gesteuerter Schaltelemente bzw. Aktuatoren geschaltet bzw. zumindest geöffnet werden können. Alternativ können die Schaltelemente der Kupplungen auch pneumatisch oder hydraulisch gesteuert werden. Ein Schließen einer zuvor geöffneten Kupplung während des Fahrbetriebs ist hingegen nicht zwingend erforderlich, sondern kann auch im Stillstand des Schienenfahrzeugs, beispielsweise bei einem Halt an einer Haltestation und insbesondere in einem lastfreien Zustand der Kupplung, sowie gegebenenfalls nach einer Sichtprüfung und Funktionsprüfung durch den Fahrzeugführer gesteuert werden.

Eine die schaltbaren Kupplungen steuernde Steuereinrichtung kann eine oder mehrere Steuereinheiten umfassen, welche beispielsweise durch jeweils eine oder mehrere Mikroprozessoren sowie zugehörige Peripherieeinheiten wie insbesondere Speicherbausteine verwirklicht sind und kommunikationstechnisch miteinander verbunden sind. Dabei können die Steuereinheiten beispielsweise einer jeweiligen Anzahl Antriebsmotoren zugeordnet sein.

Das erfindungsgemäße Antriebssystem ist insbesondere für den Einsatz in Nah-, Regional- oder Fernverkehrszügen für den Personentransport sowie in Lokomotiven geeignet. Neben Drehgestellen, in denen zumindest ein Radsatz angetrieben wird, auch als Triebdrehgestelle bezeichnet, können insbesondere bei Schienenfahrzeug für den Personentransport weitere Drehgestelle vorgesehen sein, in denen kein Radsatz angetrieben ist, diese werden auch als Laufdrehgestelle bezeichnet.

Zweier Weiterbildungen des erfindungsgemäßen Antriebssystems zufolge ist die Steuereinrichtung ausgestaltet, die Kupplungen sowie gegebenenfalls ergänzend die Stromrichter funktionsabhängig zu steuern.

Wie vorstehend bezüglich des erfindungsgemäßen Antriebssystems bereits beispielhaft beschrieben, führt die Detektion eines Fehlerfalls in einem Antriebsmotor, beispielsweise eines Kurzschlusses in der Statorwicklung, dazu, dass die Steuereinrichtung ein Schalten bzw. ein Öffnen der zumindest einen Kupplung, welche den betroffenen Antriebsmotor mit der von diesem angetriebenen Radsatzwelle verbindet, steuert, um ein fortgesetztes Mitlaufen des Rotors zu unterbinden. Die Steuerung der Kupplungen durch Steuereinrichtung erfolgt somit abhängig von der Funktion des Antriebsmotors. In gleicher Weise kann beispielsweise aufgrund der Detektion eines Schadens an einem Wälzlager der Motorwelle, dessen Zustand bzw. Funktion überwacht wird, ein entsprechendes Schalten bzw. Öffnen der zumindest einen Kupplung von der Steuereinrichtung gesteuert werden, insbesondere wenn dieser Schaden die Funktion des Antriebsmotor beeinträchtigen bzw. eine weitere Beschädigung des Antriebsmotors verursachen könnte.

Vorzugsweise steuert die Steuereinrichtung alle Komponenten des Antriebssystems, insbesondere alle Kupplungen und Stromrichter, an, deren jeweilige Funktion von einem detektierten Fehlerfall direkt oder indirekt betroffen ist.

So wird, wie vorstehend bereits beschrieben, bei Detektion eines Fehlerfalls in einem der Antriebsmotoren des Antriebssystems nicht nur die zumindest eine Kupplung von der Steuereinrichtung gesteuert, um den betroffenen Antriebsmotor von der Radsatzwelle zu trennen, sondern ergänzend auch der zugeordneten Stromrichter, um beispielsweise durch Sperren der Leistungshalbleiterschalter eine fortgesetzte Speisung des fehlerhaften Antriebsmotors durch den Stromrichter zu unterbinden. Abhängig von dem Aufbau des Antriebssystems können aufgrund eines solchen Fehlerfalls ergänzend weitere indirekt betroffene Komponenten von der Steuereinrichtung gesteuert werden. Sofern beispielsweise zwei in einem gleichen Drehgestell angeordnete Antriebsmotoren parallel von einem gemeinsamen Stromrichter gespeist werden, hat ein Sperren der Leistungshalbleiterschalter zur Folge, dass auch der andere fehlerfreie Antriebsmotor nicht mehr gespeist wird und entsprechend das Schienenfahrzeug nicht mehr antreibt. In diesem Fall steuert die Steuereinrichtung vorzugsweise ergänzend die zumindest eine Kupplung dieses anderen Antriebsmotors an, um auch diesen von der Radsatzwelle zu trennen.

Entsprechend steuert die Steuereinrichtung bei Detektion eines Fehlerfall in einem der Stromrichter des Schienenfahrzeugs, beispielsweise einem Kurzschluss in einer elektrischen oder elektronischen Komponente des Stromrichters, wodurch dessen Funktion beeinträchtigt ist, nicht nur den fehlerhaften Stromrichter selbst an, beispielsweise mittels eines Sperrens der Leistungshalbleiterschalter, sodass der eine bzw. die mehreren Antriebsmotoren nicht mehr gespeist werden. Vielmehr steuert die Steuereinrichtung auch die Kupplungen der von dem Stromrichter gespeisten Antriebsmotoren an, um diese von den Radsatzwellen zu trennen und damit ein fortgesetztes Mitlaufen der Rotoren und dadurch verursachtes Speisen des fehlerhaften Stromrichters aufgrund eines Generatorbetriebs der Antriebsmotoren zu verhindern.

Zweier Weiterbildungen des erfindungsgemäßen Antriebssystems zufolge ist die Steuereinrichtung ausgestaltet, die Kupplungen sowie gegebenenfalls ergänzend die Stromrichter situationsabhängig zu steuern.

Ergänzend zu einer funktionsabhängigen Steuerung der Kupplungen sowie gegebenenfalls ergänzend der Stromrichter, um die Sicherheit durchzugsbelüfteter permanentmagneterregter Antriebsmotoren zu gewährleisten, können die Kupplungen sowie gegebenenfalls ergänzend die Stromrichter vorteilhaft auch situationsabhängig von der Steuereinrichtung des Antriebssystems gesteuert werden. Vorteilhaft kann hierdurch die Effizienz des Antriebssystems des Schienenfahrzeugs weiter erhöht werden.

Die Steuerung erfolgt beispielsweise abhängig von einer Fahrsituation entsprechend den einleitend beschriebenen Bewegungsphasen und vorzugsweise dynamisch während des Fahrbetriebs des Schienenfahrzeugs. So kann beispielsweise bei einem Übergang von einer Beschleunigungsphase, in welcher üblicherweise alle Antriebsmotoren des Antriebssystems für die Bereitstellung einer maximale Zugkraft von den Stromrichtern gespeist werden, in eine Beharrungsphase ein Teil der Mehrzahl Antriebsmotoren mittels der Kupplungen von der zugehörigen Radsatzwelle getrennt werden, sodass das Schienenfahrzeug in der Beharrungsphase nurmehr von dem verbleibenden Teil der Mehrzahl Antriebsmotoren angetrieben wird, welche entsprechend von nur einem Teil der Mehrzahl Stromrichter gespeist werden. Diese weiterhin gespeisten Antriebsmotoren können entsprechend einer Zugkraftanforderung in einem höheren Lastbereich und damit energieeffizienter betrieben werden. Entsprechend können bei einem Übergang von einer Beharrungsphase in eine Rollphase gegebenenfalls weitere der Mehrzahl Antriebsmotoren mittels der Kupplungen von den zugehörigen Radsatzwellen getrennt werden, um aufgrund des fortgesetzten Mitlaufens der Rotoren entstehende Verluste in den Antriebsmotoren zu vermeiden. Bei einem Übergang von einer Rollphase in eine Bremsphase können alle oder zumindest ein Teil der Kupplungen wieder geschlossen werden, um mittels eines Generatorbetriebs der Antriebsmotoren kinetische Energie des Schienenfahrzeugs in elektrische Energie zu wandeln, welche beispielsweise in ein Stromversorgungsnetz, mit welchem das Schienenfahrzeug über einen Stromabnehmer elektrisch verbunden ist, oder in einen in dem Schienenfahrzeug angeordneten Energiespeicher gespeist wird.

Alternativ oder ergänzend kann die Steuerung beispielsweise abhängig von einer Lastsituation des Schienenfahrzeugs erfolgen, wobei abhängig von einer Beladung des Schienenfahrzeugs, insbesondere einer Anzahl zu befördernder Fahrgäste bzw. eines Gewichts des Schienenfahrzeugs, ein geeigneter Teil der Mehrzahl Antriebsmotoren für die Bereitstellung der geforderten Zugkraft gewählt wird. Dieser Teil der Antriebsmotoren kann wiederum in einem höheren Lastbereich und damit effizienter betrieben werden, während der verbleibende Teil der Mehrzahl Antriebsmotoren mittels der Kupplungen von den Radsatzwellen getrennt werden.

Vorzugsweise sind die Kupplungen für eine derartige dynamische und flexible Steuerung der Antriebsleistung bzw. der Zugkraft derart ausgestaltet, dass sie während des Fahrbetriebs des Schienenfahrzeugs von der Steuereinrichtung sowohl geöffnet als auch geschlossen werden können. Vorteilhaft kann hierdurch auch ein komplexeres Fahrspiel mit beispielsweise mehreren Beschleunigungsphasen und Beharrungsphasen mit jeweils optimal energieeffizienten Betrieb der Antriebsmotoren unterstützt werden. Zudem ermöglichen während des Fahrbetriebs schließbare Kupplungen, dass beispielsweise bei Detektion eines Fehlerfalls in einem der Antriebsmotoren, welche zu einem Öffnung der Kupplung führt, ein anderer, zuvor von der Radsatzwelle mittels der Kupplung getrennter Antriebsmotor durch Schließen der Kupplung und Speisen durch den zugeordneten Stromrichter hinzugeschaltet wird, wodurch die Antriebsleistung des Antriebssystems vorteilhaft konstant gehalten werden kann. Für das Schließen einer Kupplung während des Fahrbetriebs steuert die Steuereinrichtung den Stromrichter beispielsweise derart an, dass sich die Motorwelle des Antriebsmotors mit einer Drehzahl der Radsatzwelle bzw., bei einem zwischengeschalteten Getriebe, mit einer zu dem Übersetzungsverhältnis des Getriebes korrespondierenden Drehzahl einer Getriebewelle dreht, sodass die mit den Wellen verbundenen Kupplungsteile eine synchrone bzw. weitgehend synchrone Drehzahl aufweisen.

Um Schäden an Lagern eines durch Schalten bzw. Öffnen der zumindest einen Kupplung von der Radsatzwelle getrennten Antriebsmotors zu verhindern, kann der speisende Stromrichter kontinuierlich oder zeitweise, insbesondere periodisch, derart von der Steuereinrichtung gesteuert werden, dass der Rotor und damit die Motorwelle dieses Antriebsmotors mit einer bestimmten, vorzugsweise niedrigen Drehzahl rotiert. Eine solche Speisung des Antriebsmotors erfolgt dabei nur nach einem situationsabhängigen, nicht jedoch nach einem funktionsabhängigen Schalten der Kupplung, welches aufgrund eines detektierten Fehlerfalls in dem Antriebsmotor erfolgt. Aufgrund der weiterhin bestehenden Trennung von der Radsatzwelle führt die Rotation des Rotors nicht zu einem zusätzlichen Antreiben des Schienenfahrzeugs. Schäden an Lagern eines Antriebsmotors, insbesondere an Wälzlagern der Motorwelle, können beispielsweise aufgrund der während des Fahrbetriebs weiterhin auf die stillstehende Motorwelle einwirkenden Stöße und Vibrationen auftreten.

Einer weiteren Weiterbildung des erfindungsgemäßen Antriebssystems zufolge treibt jeder Antriebsmotor die Radsatzwelle direkt oder über ein einstufiges oder mehrstufiges Getriebe an, wobei die zumindest eine Kupplung zwischen einer Motorwelle des Antriebsmotors und der Radsatzwelle, zwischen der Motorwelle und einer Eingangswelle des Getriebes oder, sofern das Getriebe mehrstufig ist, zwischen einer ersten und einer zweiten Stufe des Getriebes angeordnet ist.

Ein Antriebsmotor eines Schienenfahrzeugs kann auf unterschiedliche Weise mittels einer oder mehrerer Kupplungen kraftschlüssig bzw. formschlüssig mit einer Radsatzwelle verbunden sein. So ist beispielsweise bei einem Direktantrieb der Rotor bzw. die Motorwelle des Antriebsmotors als eine Hohlwelle ausgestaltet, durch welche die Radsatzwelle geführt ist. Eine sowohl mit der Motorwelle als auch der Radsatzwelle verbundene Kupplung ermöglicht dabei vorzugsweise einen Ausgleich sowohl eines axialen, radialen als auch winkeligen Versatzes zwischen den beiden Wellen. Die ergänzenden Elemente der schaltbaren Kupplung, bei einer Lamellenkupplung beispielsweise die Schaltelemente bzw. Aktuatoren sowie mehrere mit der Motorwelle verbundene Außenlamellen, können dabei auf der Motorseite angeordnet sein, während mehrere Innenlamellen der Lamellenkupplung mit dem radsatzwellenseitigen Teil der Kupplung gekoppelt sind.

Sofern der Antriebsmotor bzw. die Motorwelle über ein Getriebe mit der Radsatzwelle verbunden ist, kann die schaltbare Kupplung abhängig von dem Aufbau des Antriebsmotors und des Getriebes sowie insbesondere abhängig von der Aufhängung bzw. Lagerung des Antriebsmotors und des Getriebes an dem Wagenkasten, in dem Drehgestellrahmen oder auf der Radsatzwelle an unterschiedlichen Stellen angeordnet sein.

Bei beispielsweise einem achsreitenden Getriebe, welches sich auf der Radsatzwelle sowie über eine Drehmomentstütze an beispielsweise dem Drehgestellrahmen abstützt, kann die Motorwelle eines quer zur Fahrtrichtung angeordneten und beispielsweise in dem Drehgestellrahmen aufgehängten Antriebsmotors mittels beispielsweise einer so genannten Bogenzahnkupplung mit einer Eingangswelle des Getriebes verbunden sein, wobei die Bogenzahnkupplung wiederum einen Ausgleich sowohl eines axialen, radialen als auch winkeligen Versatzes zwischen den Wellen ermöglicht. Der Bogenzahnkupplung kann sich in axialer Richtung eine schaltbare Zahn- oder Lamellenkupplung anschließen bzw. in dieser integriert sein, wie es in der einleitend genannten deutschen Offenlegungsschrift DE 10 2015 215 576 A1 offenbart ist, wobei die schaltbare Kupplung alternativ mit dem motorseitigen oder dem getriebeseitigen Teil der Bogenzahnkupplung verbunden sein kann.

Ferner kann der Antriebsmotor beispielsweise eine Rotorhohlwelle aufweisen, welche eine Getriebeeingangswelle umschließt. Eine Verbindung der beiden Wellen erfolgt dabei beispielsweise mittels im Bereich beider Stirnseiten des Antriebsmotors angeordneter schaltbarer Zahn- oder Lamellenkupplungen. In gleicher Weise kann das Getriebe eine Ritzelhohlwelle aufweisen, welche die Motorwelle umschließt, wobei eine Verbindung der beiden Wellen mittels im Bereich beider Stirnseiten des Getriebes angeordneter schaltbarer Zahn- oder Lamellenkupplungen erfolgt.

Bei einem mehrstufigen Getriebe kann eine schaltbare Kupplung auch beispielsweise zwischen zwei Übersetzungsstufen angeordnet werden, wobei die schaltbare Kupplung vorzugsweise in einer Zwischenwelle zwischen einer ersten und einer zweiten Übersetzungsstufe angeordnet wird, da nach der ersten Übersetzungsstufe das zu übertragende Drehmoment noch begrenzt ist und die Schaltelemente der Kupplung entsprechend mit einer hinreichend kleinen Baugröße realisierbar sind, um eine Unterbringung in dem Getriebegehäuse zu ermöglichen.

Ein erfindungsgemäßes Schienenfahrzeug weist zumindest ein erfindungsgemäßes Antriebssystem auf.

Einer Weiterbildung des erfindungsgemäßen Schienenfahrzeugs zufolge ist dieses als eine Lokomotive oder ein Triebzug, insbesondere für den lokalen, regionalen oder überregionalen Personentransport, ausgestaltet. Dabei kann das Schienenfahrzeug einen einzigen Wagen oder mehrere mittels geeigneter Kupplungen verbundene Wagen umfassen, wobei die Antriebsmotoren und insbesondere die Stromrichter des Antriebssystems insbesondere über mehrere Wagen verteilt angeordnet sein können.

Bei einem erfindungsgemäßen Verfahren zum Steuern eines Antriebssystems eines Schienenfahrzeugs, wobei das Antriebssystem zumindest eine Mehrzahl Stromrichter zum Speisen einer jeweiligen Anzahl Antriebsmotoren mit elektrischer Energie, eine Mehrzahl Antriebsmotoren zum Antreiben einer jeweiligen Radsatzwelle, wobei die Antriebsmotoren ausschließlich als durchzugsbelüftete permanentmagneterregte Antriebsmotoren ausgestaltet sind, schaltbare Kupplungen, wobei zwischen jedem Antriebsmotor und der von diesem angetriebenen Radsatzwelle zumindest eine Kupplung angeordnet ist, und eine Steuereinrichtung aufweist, werden zumindest die Kupplungen von der Steuereinrichtung funktionsabhängig gesteuert.

Wie vorstehend bezüglich des erfindungsgemäßen Antriebssystems bereits ausgeführt, werden die Kupplungen, welche die Antriebsmotoren des Antriebssystems mit einer jeweiligen Radsatzwelle verbinden, abhängig von der Funktion der Antriebsmotoren sowie gegebenenfalls ergänzend abhängig von der Funktion der diese speisenden Stromrichter gesteuert, wodurch ein Schutz sowohl der Antriebsmotoren selbst als auch der Umgebung gewährleistet wird. Dieser Schutz ermöglicht es, die permanentmagneterregten Antriebsmotoren durchzugsbelüftet auszugestalten, wodurch diese vorteilhaft eine höhere Effizienz insbesondere gegenüber gekapselt ausgestalteten permanentmagneterregten Antriebsmotoren, wie sie bislang in Schienenfahrzeugen eingesetzt wurden, aufweisen.

Einer Ausgestaltung des Verfahrens zufolge werden die Kupplungen situationsabhängig von der Antriebssteuerung gesteuert.

Ergänzend können die Kupplungen vorteilhaft dazu dienen, abhängig von beispielsweise einer Fahrsituation, insbesondere einer Bewegungsphase, oder einer Beladungssituation des Schienenfahrzeugs von der Steuereinrichtung derart gesteuert zu werden, dass eine hinsichtlich einer geforderten Antriebsleistung bzw. Zugkraft möglichst optimale Anzahl Antriebsmotoren eingesetzt wird und diese in einem Lastbereich möglichst hoher Effizienz betrieben werden.

Einer weiteren Ausgestaltung des Verfahrens zufolge werden die Stromrichter funktionsabhängig und/oder situationsabhängig von der Steuereinrichtung gesteuert

Wie vorstehend ebenfalls bereits bezüglich des erfindungsgemäßen Antriebssystems ausgeführt, können neben den Kupplungen auch die die Antriebsmotoren speisenden Stromrichter abhängig von der Funktion der Antriebsmotoren und/oder der Stromrichter von der Steuereinrichtung gesteuert werden, um den für die Antriebsmotoren geforderten Schutz zu gewährleisten. Vorteilhaft kann hierdurch von einem ergänzenden Einsatz von Schaltschützen in den elektrischen Verbindungen zwischen dem Stromrichter und den von diesem gespeisten Antriebsmotoren abgesehen werden.

Alternativ oder ergänzend können die Stromrichter zudem zusammen mit Antriebsmotoren abhängig von wiederum beispielsweise einer Fahrsituation oder einer Beladungssituation des Schienenfahrzeugs von der Steuereinrichtung gesteuert werden, um die Effizienz des Antriebssystems des Schienenfahrzeugs zu erhöhen.

Schließlich wird das Antriebssystems eines Schienenfahrzeugs erfindungsgemäß zur Steuerung einer Antriebsleistung des Antriebssystems mittels der schaltbaren Kupplungen verwendet.

Der Einsatz schaltbarer Kupplungen zwischen den durchzugsbelüfteten permanentmagneterregten Antriebsmotoren und der jeweiligen Radsatzwelle ermöglicht, insbesondere wenn die Kupplungen ausgestaltet sind, unter Last geöffnet und geschlossen zu werden, eine flexible Nutzung der Antriebsmotoren abhängig von einer Fahr- und/oder Lastsituation des Schienenfahrzeugs, wodurch das Antriebssystem vorteilhaft mit einer hohen Effizienz betrieben werden kann.

Ausführungsbeispiele der Erfindung werden nachfolgend anhand von Figuren beschrieben. Dabei zeigen:
- FIG 1: einen Triebzug als beispielhaftes Schienenfahrzeug, und
- FIG 2: ein Triebdrehgestell des Triebzugs der FIG 1.

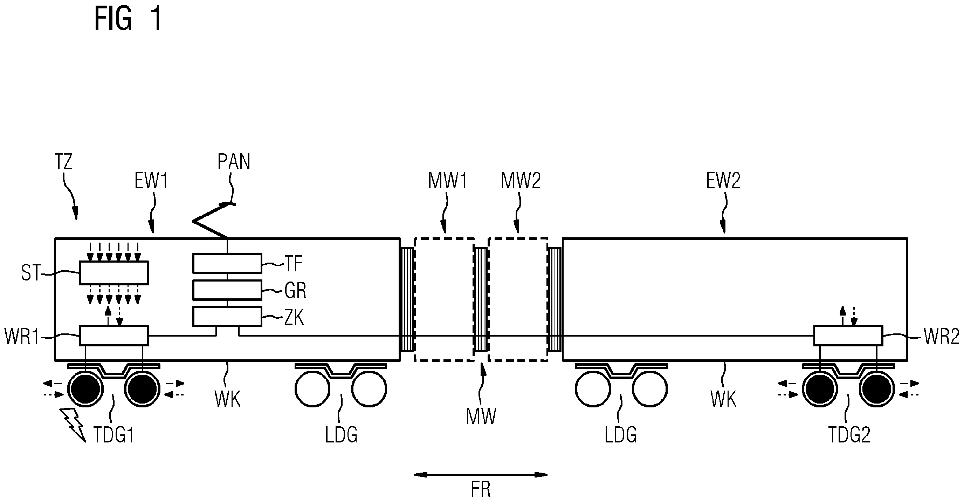

FIG 1 zeigt schematisch ein Schienenfahrzeug, welches beispielhaft als ein Triebzug TZ für den Personentransport ausgestaltet ist. Der Triebzug TZ umfasst eine Mehrzahl Wagen, wobei zwischen einem ersten Endwagen EW1 und einem zweiten Endwagen EW2 eine Anzahl Mittelwagen MW angeordnet sind, von denen in der FIG 1 lediglich zwei MW1, MW2 vereinfacht dargestellt sind. Die Wagen sind in Fahrtrichtung FR hintereinander angeordnet mit mittels geeigneter Wagenkupplungen mechanisch miteinander verbunden. Jeder der Wagen verfügt über einen Wagenkasten WK, wobei vorzugsweise alle Wagenkästen WK zumindest einen Fahrgastraum für den Aufenthalt von Fahrgästen bereitstellen. Zwischen den Wagen sind Wagenübergänge vorgesehen, über welche sich Fahrgäste zwischen benachbarten Wagen bzw. über die gesamte Länge des Triebzugs bewegen können.

Die Wagenkästen WK stützen sich jeweils über Drehgestelle auf Schienen eines Gleises ab. An jedem Wagenkasten sind beispielhaft jeweils zwei Drehgestelle angeordnet, wobei benachbarte Wagenkästen WK alternativ ebenso auf einem gemeinsamen so genannten Jakobs-Drehgestell abgestützt werden können. Die Drehgestelle sind als Triebdrehgestelle TDG mit zumindest einem angetriebenen Radsatz oder als Laufdrehgestelle LDG mit ausschließlich nicht angetriebenen Radsätzen ausgestaltet. Gemäß der fachüblichen Kennzeichnung angetriebener Radsätze durch Ausfüllen der schematisch dargestellten Räder sind an den Endwagen EW1, EW2 des Triebzugs TZ jeweils ein Triebdrehgestell TDG1 bzw. TDG2 mit jeweils zwei angetriebenen Radsätzen sowie ein jeweiliges Laufdrehgestell LDG1 bzw. LDG2 angeordnet. An den Mittelwagen EW1, EW2 sind zudem ausschließlich Laufdrehgestelle angeordnet, welche in der FIG 1 jedoch nicht speziell dargestellt sind.

Alternativ zu dem dargestellten Triebzug TZ mit mehreren Mittelwagen MW kann dieser lediglich die beiden Endwagen EW1, EW2 umfassen, an welchen entsprechend der FIG 1 Triebdrehgestelle TDG1, TDG2 und Laufdrehgestelle LDG1, LDG2 angeordnet sind, wobei wiederum anstelle der beiden Laufdrehgestelle LDG1, LDG2 ein Jakobs-Drehgestell vorgesehen sein kann. Ebenso kann das Schienenfahrzeug auch als eine Lokomotive ausgestaltet sein, deren Wagenkasten sich ausschließlich auf Triebdrehgestellen abstützt.

In den Endwagen EW1, EW2 des Triebzugs TZ sind schematisch Komponenten des elektrischen Antriebssystems angegeben. Diese Komponenten sind üblicherweise in speziellen Bereichen innerhalb des Wagenkastens WK, im Unterflurbereich, im Dachbereich oder auch über mehrere Wagen verteilt angeordnet. Weitere Komponenten des Antriebssystems wie beispielsweise eine oder mehrere Traktionsbatterien oder für den Betrieb der Komponenten sowie den Fahrgastkomfort erforderliche Hilfsbetriebe sind in der FIG 1 hingegen nicht dargestellt.

Über einen im Dachbereich des ersten Endwagens EW1 angeordneten Stromabnehmer PAN ist das beispielhafte Antriebssystem des Triebzugs TZ mit einer nicht dargestellten Oberleitung eines Bahnversorgungsnetzes elektrisch verbindbar, wobei die Oberleitung einen Einphasenwechselstrom mit einer Spannung von 15kV bei 16.7Hz oder 25kV bei 50Hz führt. Dieser Wechselstrom wird einer netzseitigen Primärwicklung eines Transformators TF zugeführt, welcher das netzseitige Spannungsniveau auf ein niedrigeres Spannungsniveau heruntertransformiert. Eine Sekundärwicklung des Transformators TF ist mit einem netzseitigen Stromrichter, beispielsweise einem Gleichrichter GR bzw. Vierquadrantensteller, verbunden, welcher die anliegende Wechselspannung in eine Gleichspannung wandelt und einen Gleichspannungszwischenkreis ZK speist. Der Gleichspannungszwischenkreis ZK dient nach dem Beispiel der FIG 1 einer Speisung von zwei lastseitigen Stromrichtern, beispielsweise Pulswechselrichtern WR1, WR2, welche die Gleichspannung des Gleichspannungszwischenkreises ZK jeweils in eine Dreiphasenwechselspannung variabler Frequenz und Amplitude wandeln, mit welcher die Statorwicklungen der jeweiligen Antriebsmotoren M in den Triebdrehgestellen TDG1 bzw. TDG2 gespeist werden. Gesteuert wird die Funktion insbesondere der Stromrichter GR, WR1, WR2 beispielsweise von einer zentralen Steuereinrichtung ST des Antriebssystems.

Das Antriebssystem des Triebzugs TZ kann alternativ oder ergänzend auch mit einer Oberleitung oder einer Stromschiene, welche einen Gleichstrom mit einem Spannungsniveau von beispielsweise 3kV oder 1.5kV führt, über einen entsprechenden Stromabnehmer elektrisch verbunden werden. In diesem Fall kann der Gleichspannungszwischenkreis ZK beispielsweise direkt bzw. über einen Gleichspannungswandler, welcher das Spannungsniveau des Bahnversorgungsnetzes auf ein gewünschtes Spannungsniveau des Gleichspannungszwischenkreises wandelt, gespeist werden. Ferner kann das Antriebssystem des Triebzugs TZ alternativ oder ergänzend auch mittels einer oder mehrerer Traktionsbatterien und/oder Brennstoffzellensystemen mit elektrischer Energie versorgt werden, wobei der Gleichspannungszwischenkreis beispielsweise wiederum über einen Gleichspannungswandler gespeist wird.

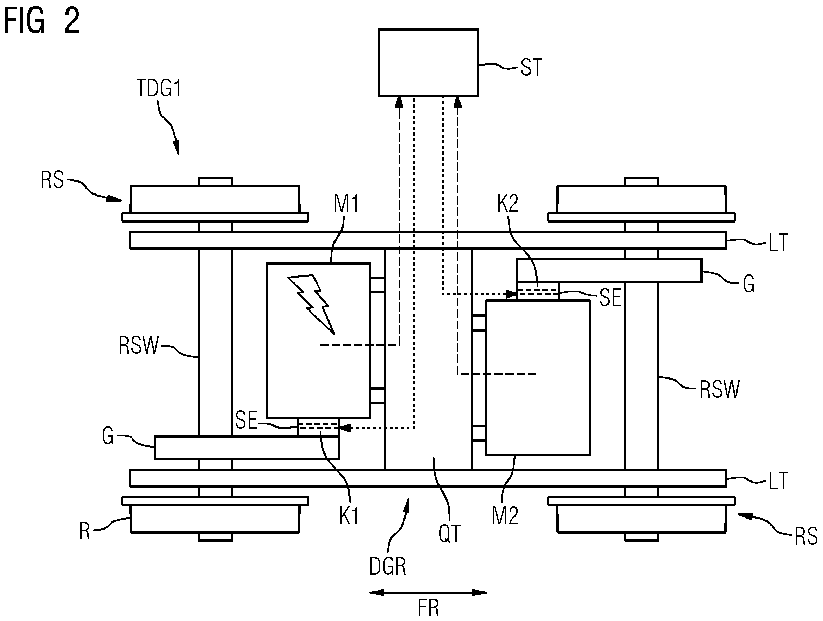

FIG 2 zeigt ergänzend schematisch den Aufbau des an dem ersten Endwagen EW1 angeordneten ersten Triebdrehgestells TDG1, wobei das zweite Triebdrehgestell TDG2 an dem zweiten Endwagen EW2 vorzugsweise identisch aufgebaut ist. Ein Drehgestellrahmen DGR des ersten Triebdrehgestells TDG1 besteht beispielhaft aus einem zentralen Querträger QT sowie zwei daran angeordneten Längsträgern LT, welche zusammen die Form eines liegenden Buchstaben H bilden. Über den Drehgestellrahmen DGR ist das erste Triebdrehgestell TDG1 drehbar und gefedert mit dem Wagenkasten WK des ersten Endwagens EW1 mechanisch verbunden. An den Längsträgern LT sind zwei Radsätze RS in jeweiligen Radsatzlagern drehbar gelagert, wobei jeder Radsatz RS eine Radsatzwelle RSW sowie zwei drehstarr mit dieser verbundene Räder R umfasst.

An dem Querträger QT des Drehgestellrahmens DGR sind zwei Antriebsmotoren M1, M2 aufgehängt, welche jeweils als ein durchzugsbelüfteter permanentmagneterregter Synchronmotor ausgestaltet sind. Die Antriebsmotoren M1, M2 sind dabei entsprechend einem so genannten Querantrieb angeordnet, bei welchem die Motorwelle parallel zur Radsatzwelle und damit quer zur Fahrtrichtung FR des Schienenfahrzeugs angeordnet ist. Die Motorwellen der Antriebsmotoren M1, M2 sind jeweils über eine schaltbare Kupplung K1, K2 mit einer Eingangswelle eines sich auf der Radsatzwelle RSW abstützenden Getriebes G verbunden, während die Radsatzwelle RSW eine Ausgangswelle des Getriebes G darstellt. Das Getriebe kann insbesondere abhängig von einem gewünschten Übersetzungsverhältnis sowie den gegebenen Platzverhältnissen ein- oder mehrstufig ausgeführt sein. In dem ersten Triebdrehgestell TDG1 treiben die beiden Antriebsmotoren M1, M2 somit jeweils über eine Kupplung K1, K2 und ein Getriebe G einen Radsatz RS an.

Die Kupplungen K1, K2 sind beispielhaft als eine jeweilige so genannte Bogenzahnkupplung ausgestaltet, welche aufgrund ihrer speziellen Ausgestaltung einen bestimmten relativen Versatz zwischen der Motorwelle und der Eingangswelle des Getriebes G bzw. zwischen dem Motor M1, M2 und dem Radsatz RS in verschiedene Ebenen ausgleichen kann. Ferner weist die jeweilige Kupplung K1, K2 beispielsweise ein oder mehrere motorseitig an der Bogenzahnkupplung ergänzend angeordnete oder in dieser integrierte Schaltelemente SE, beispielsweise elektromagnetische Aktuatoren, auf. Diese Schaltelemente SE ermöglichen ein gesteuertes Schalten bzw. Öffnen und Schließen der jeweiligen Kupplung K1, K2, wodurch eine bestehende kraft- bzw. formschlüssige Verbindung zwischen der Motorwelle und der Eingangswelle des Getriebes getrennt bzw. wiederhergestellt werden kann. Vorzugsweise sind die Schaltelemente SE ausgestaltet, nicht nur unter Last, d.h. während einer Drehmomentübertragung, gesteuert geöffnet werden zu können, sondern auch während des Fahrbetriebs des Triebzugs TZ, d.h. bei einer sich drehenden Eingangswelle des Getriebes G, auch wieder geschlossen werden zu können. Die Kupplungen K1, K2 sind somit beispielsweise als Bogenzahnkupplungen mit jeweils integrierter Schaltkupplung ausgestaltet.

Zum Schalten bzw. Öffnen und Schließen der jeweiligen Kupplung K1, K2 werden die Schaltelemente SE von der zentralen Steuereinrichtung ST angesteuert, wie es in den FIG 1 und 2 anhand der gepunkteten Pfeile bzw. Linien beispielhaft angegeben ist, wobei Steuersignalpfade zwischen der Steuereinrichtung ST und den Kupplungen K1, K2 bzw. den Stromrichtern WR1, WR2 in der FIG 1 aus Gründen der Übersichtlichkeit nicht vollständig dargestellt sind.

Die Steuereinrichtung ST schaltet die Kupplungen K1, K2 insbesondere abhängig von einer Funktion der Antriebsmotoren M1, M2, um eine geforderte Sicherheit permanentmagneterregter Antriebsmotoren gegenüber der Umgebung bzw. der Umwelt zu gewährleisten. Hierfür wird der Zustand der Antriebsmotoren M1, M2 mittels geeigneter Sensoren überwacht, die an bzw. im Umfeld der Antriebsmotoren M1, M2 angeordnet sind. Beispielsweise können dies Temperatursensoren, Vibrationssensoren sowie Stromsensoren sein. Insbesondere während des Fahrbetriebs des Triebzugs TZ von diesen Sensoren bereitgestellte Signale werden in der Steuereinrichtung ST oder beispielsweise einer vorgeordneten Auswerteeinrichtung ausgewertet und in der Steuereinrichtung ST hinsichtlich des Vorliegens eines Fehlerfalls, beispielsweise des Vorliegens eines Kurzschlusses in der Statorwicklung oder eines Schadens an einem Wälzlager der Motorwelle, bewertet. In den FIG 1 und 2 sind die Sensorsignalpfade zwischen den Antriebsmotoren M1, M2 bzw. den Wechselrichtern WR1, WR2 und der Steuereinrichtung ST wiederum lediglich schematisch mittels gestrichelter Pfeile bzw. Linien dargestellt. Nicht speziell dargestellt sind hingegen für die Funktion bzw. das Schalten der Kupplungen K1, K2 erforderliche weitere Einrichtungen wie beispielsweise elektrisch, pneumatisch oder hydraulisch versorgte Aktuatoren.

Sofern ein Fehlerfall, beispielsweise ein Kurzschluss in der Statorwicklung des ersten Antriebsmotors M1 des ersten Triebdrehgestells TDG1, welcher in FIG 1 und 2 symbolisch mittels eines Blitzes dargestellt ist, von den Sensoren und der Steuereinrichtung ST detektiert wurde, steuert die Steuereinrichtung ST die erste Kupplung K1 des als fehlerhaft detektierten ersten Antriebsmotors M1 an, sodass diese geöffnet und damit die bestehende mechanische Verbindung des ersten Antriebsmotors M1 mit der von diesem angetriebenen Radsatzwelle RSW getrennt wird. Um ergänzend ein fortgesetztes Speisen des fehlerhaften ersten Antriebsmotors M1 durch den ersten Stromrichter WR1, was weiter Strom in den bestehenden Kurzschluss treiben würde, zu unterbinden, steuert die Steuereinrichtung ST ergänzend auch den ersten Stromrichter WR1 an. Beispielsweise sperrt die Steuereinrichtung ST hierfür die Leistungshalbleiterschalter des ersten Stromrichters WR1, welche der Wandlung der Gleichspannung des Gleichspannungszwischenkreises ZK in eine Dreiphasenwechselspannung variabler Spannungshöhe und Frequenz dienen, sodass kein Strom mehr in die Statorwicklung des fehlerhaften ersten Antriebsmotors M1 fließt.

Nach dem Beispiel der FIG 1 speist der erste Stromrichter WR1 bzw. eine Stromrichterschaltung in dem ersten Stromrichter WR1 parallel beide Antriebsmotoren M1, M2 in dem ersten Triebdrehgestell TDG1. Ein Sperren des ersten Stromrichters WR1 durch die Steuereinrichtung ST führt somit dazu, dass auch der zweite Antriebsmotor M2, welcher fehlerfrei ist bzw. nicht als fehlerhaft detektiert wurde, nicht mehr von dem ersten Stromrichter WR1 gespeist wird. Um mithin ein Rückspeisen des zweiten Antriebsmotors M2 in den ersten Stromrichter WR1 aufgrund eines fortgesetzten Mitlaufens der Radsatzwelle und damit der Motorwelle des zweiten Antriebsmotors M2 zu unterbinden, steuert die Steuereinrichtung ST auch die zweite Kupplung K2 an, sodass auch der zweite Antriebsmotor M2 von der von diesem angetriebenen Radsatzwelle RSW getrennt wird.

In der Konfiguration des Antriebssystems des beispielhaften Triebzugs TZ mit zwei Triebdrehgestellen TDG1, TDG2 mit jeweils zwei von einem gemeinsamen Stromrichter WR1 gespeisten Antriebsmotoren M1, M2 führt die Detektion eines beispielhaft fehlerhaften ersten Antriebsmotors M1 in dem ersten Triebdrehgestell TDG1 somit dazu, dass beide Antriebsmotoren M1, M2 des ersten Triebdrehgestells TDG1 von deren angetriebenen Radsätzen RS getrennt werden, wodurch nurmehr maximal die Hälfte der gesamten Antriebsleistung für den Betrieb des Triebzugs TZ zur Verfügung steht. Mit einer derart reduzierten Antriebsleistung kann der Fahrbetrieb des Triebzugs TZ jedoch weiter aufrechterhalten werden bzw. der Triebzug TZ zumindest bis zu einer nächsten Haltestation gemäß dem gegebenen Streckenplan bewegt werden.

Sofern in einer, nicht dargestellten, alternativen Konfiguration des Antriebssystems des Triebzugs jeder der Antriebsmotoren der Triebdrehgestelle von einem gesonderten Stromrichter bzw. von einer gesonderten Stromrichterschaltung des Stromrichters gespeist wird, können alle fehlerfreien Antriebsmotoren weiterhin betrieben werden, sodass dem Triebzug bei einem fehlerhaften Antriebsmotoren weiterhin maximal dreiviertel der gesamten Antriebsleistung zur Verfügung steht. Dies wäre auch in einer weiteren, ebenfalls nicht dargestellten, alternativen Konfiguration des Antriebssystems mit gesamt vier Triebdrehgestelle mit jeweils zwei von einem gemeinsamen Stromrichter gespeisten Antriebsmotoren der Fall, wobei bei einem Abschalten eines der Triebdrehgestelle aufgrund eines fehlerhaften Antriebsmotors die weiteren drei Triebdrehgestelle weiterhin für den Antrieb des Triebzugs zur Verfügung stehen.

In gleicher Weise steuert die Steuereinrichtung ST die Kupplungen K1, K2 in dem ersten Triebdrehgestell TDG1 ergänzend abhängig von einer Funktion des ersten Stromrichters WR1 an, wobei der Zustand des ersten Stromrichters WR1 entsprechend mittels geeigneter Sensoren überwacht wird. Sofern aus Signalen der Sensoren ein Fehlerfall, beispielsweise ein Kurzschluss in einem Leistungshalbleiterschalter des ersten Stromrichters WR1, von der Steuereinrichtung ST detektiert wird, sperrt die Steuereinrichtung ST nicht nur Leistungshalbleiterschalter des ersten Stromrichters WR1, sondern steuert ergänzend die Kupplungen K1, K2 an, sodass diese geöffnet werden. Durch das Öffnen der Kupplungen K1, K2 werden wiederum die bestehenden mechanischen Verbindungen zwischen den Antriebsmotoren M1, M2 und den Radsatzwellen RSW des ersten Triebdrehgestells TDG1 aufgetrennt, wodurch ein Stromfluss in den fehlerhaften ersten Stromrichter WR1 aufgrund eines Generatorbetriebs der Antriebsmotoren M1, M2 und damit eine mögliche weitere Beschädigung des ersten Stromrichters WR1 verhindert wird. Somit kann der fehlerhafte erste Stromrichter WR1 durch ein Sperren sowie einem Öffnen der Kupplungen K1, K2 der gespeisten Antriebsmotoren M1, M2 elektrisch weitestgehend isoliert werden und dadurch ein möglicher Schaden an weiteren Komponenten des Antriebssystems vermieden werden. Mittels des zweiten Wechselrichter WR2 sowie der von diesem gespeisten Antriebsmotoren kann der Fahrbetrieb des Triebzugs TZ hingegen weiterhin aufrechterhalten werden.

Ein Steuern der Kupplungen K1, K2 durch die Steuereinrichtung ST kann jedoch nicht nur dem Schutz der Antriebsmotoren sowie der Umgebung bzw. Umwelt bei einem detektierten Fehlerfall, sondern ergänzend auch dem aktiven Steuern des Antriebssystems bzw. der Antriebsleistung dienen, um dieses möglichst optimal energieeffizient zu betreiben.

So können beispielsweise wiederum die Kupplungen K1, K2 in dem ersten Triebdrehgestell TDG1 abhängig von einer einleitend beschriebenen Bewegungsphase, in welcher sich der Triebzug TZ befindet, geöffnet sowie gegebenenfalls wieder geschlossen werden. Vorzugsweise sind die Kupplungen K1, K2 dabei derart ausgestaltet, dass sie während des Fahrbetriebs des Triebzugs TZ, d.h. wenn dieser nicht beispielsweise an einer Haltestation stillsteht, sowohl geöffnet als auch geschlossen werden können, um die Antriebsleistung ebenso wie die Generatorleistung der Antriebsmotoren M1, M2 optimal entsprechend den jeweiligen Anforderungen der Bewegungsphasen steuern zu können.

Die folgende Abfolge der Bewegungsphasen entspricht einem typischen Fahrspiel zwischen zwei Haltestationen, beispielhaft als Start-Haltestation und Ziel-Haltestation bezeichnet, an einer von dem Triebzug TZ zu befahrenden Strecke. Ausgehend von einem Stillstand an der Start-Haltestation beschleunigt der Triebzug TZ in einer Beschleunigungsphase zunächst auf eine bestimmte Geschwindigkeit, wobei sowohl die Geschwindigkeit als auch ein zu erzielender Wert für die Beschleunigung vorgegeben sind. Das Beschleunigen und Erreichen der vorgegebenen Geschwindigkeit erfordert üblicherweise eine maximale bzw. nahezu maximale Zugkraft der Antriebsmotoren des Antriebssystems, sodass in der Beschleunigungsphase zunächst alle Kupplungen geschlossen sind und alle Antriebsmotoren in den Triebdrehgestellen TDG1, TDG2 von den Stromrichter WR1, WR2 gespeist werden.

Abhängig von dem Streckenverlauf folgt auf die Beschleunigungsphase bzw. nach Erreichen der vorgegebenen Geschwindigkeit üblicherweise eine Beharrungsphase, in welcher die erreichte Geschwindigkeit über eine bestimmte Zeit bzw. Strecke weitgehend konstant gehalten wird. Das Halten der Geschwindigkeit erfordert üblicherweise eine gegenüber dem vorherigen Beschleunigen deutlich geringere Zugkraft, welche lediglich die Fahrwiderstandskraft ausgleichen muss. Sofern das Antriebssystem in dieser Phase weiterhin alle Fahrmotoren speist, werden diese jeweils nur in Teillast und somit mit einer schlechteren Effizienz betrieben. Nach Übergang in die Beharrungsphase steuert die Steuereinrichtung ST daher die Kupplungen K1, K2 an, sodass die Antriebsmotoren M1, M2 des ersten Triebdrehgestells TDG1 von den Radsätzen RS getrennt werden. Weiterhin sperrt die Steuereinrichtung ST auch den ersten Stromrichter WR1, sodass dieser die Antriebsmotoren M1, M2 nicht mehr speist. Der Antrieb des Triebzugs TZ erfolgt nunmehr ausschließlich durch den zweiten Stromrichter WR1 sowie die Antriebsmotoren des zweiten Triebdrehgestells TDG2, welche jedoch in einem höheren und damit effizienteren Lastbereich betrieben werden. Die Antriebsmotoren M1, M2 des ersten Triebdrehgestells TDG1 kommen hingegen zum Stillstand, sodass in diesen keine Verluste aufgrund eines erzwungenen Mitlaufens mehr auftreten. Um mögliche Schäden an den Motorwellen der Antriebsmotoren M1, M2 während dieser Phase zu verhindern, kann der erste Stromrichter WR1 von der Steuereinrichtung ST beispielsweise periodisch derart ansteuert werden, dass die speisenden Ströme eine Rotation der Motorwellen mit einer niedrigen Drehzahl bewirken.

Auf die Beharrungsphase folgt üblicherweise eine Rollphase, in welcher die Zugkraft bis auf null reduziert wird, sodass sich die Geschwindigkeit des Triebzugs TZ aufgrund der dann überwiegenden Fahrwiderstandskraft kontinuierlich verringert. In dieser Phase könnte die Steuereinrichtung ST prinzipiell durch Öffnen der entsprechenden Kupplungen auch die Antriebsmotoren des zweiten Triebdrehgestells TDG2 von den angetriebenen Radsätzen trennen. Da in dieser Phase die Effizienz des Antriebssystems jedoch eine untergeordnete Bedeutung besitzt, da die Antriebsmotoren nicht gespeist werden, werden die Kupplungen des zweiten Triebdrehgestells TDG2 weiterhin geschlossen gehalten.

Der Rollphase folgt üblicherweise eine Bremsphase, in welcher die Geschwindigkeit weiter soweit reduziert wird, dass der Triebzug TZ an der Ziel-Haltestation zum Stillstand kommt, um Fahrgästen an dieser das Aus- und Einsteigen zu ermöglichen. Die Bereitstellung einer die mit der Geschwindigkeit abnehmenden Fahrwiderstandskraft ergänzenden Bremskraft erfolgt vorzugsweise ausschließlich bzw. überwiegend durch Betreiben der Antriebsmotoren als Generatoren, wodurch kinetische Energie des Triebzugs TZ in elektrische Energie gewandelt und dadurch ein Bremsmoment erzeugt werden kann. Vorteilhaft verringert ein solches regeneratives Bremsen den Verschleiß von Reibungsbremsen des Triebzugs TZ. Da die Antriebsmotoren M1, M2 des ersten Triebdrehgestells TDG1 in der Beharrungsphase durch das gesteuerte Öffnen der Kupplungen K1, K2 von den Radsatzwellen RSW getrennt wurden, können diese entsprechend nicht als Generatoren betrieben werden und damit kein zusätzliches Bremsmoment bereitstellen. Sofern die Kupplungen K1, K2 ausgestaltet sind, während des Fahrbetriebs, also insbesondere in einer Bremsphase des Fahrspiels, wieder geschlossen werden zu können, werden diese von der Steuereinrichtung ST vorzugsweise entsprechend angesteuert, um auch die Antriebsmotoren M1, M2 des ersten Triebdrehgestells TDG1 als Generatoren zur Bereitstellung eines Bremsmoments zu betreiben. Hierzu kann die Steuereinrichtung ST beispielsweise auf Basis einer mittels Drehzahlsensoren bestimmten Drehzahl der Radsatzwellen bzw. Getriebeeingangswellen den ersten Stromrichter WR1 derart ansteuern, dass die Motorwellen der Antriebsmotoren M1, M2 mit einer gleichen bzw. nahezu gleichen Drehzahl rotieren, um ein verschleißfreies Schließen der Kupplungen K1, K2 zu gewährleisten.

Ein Schließen zuvor geöffneter Kupplungen K1, K2 kann beispielsweise ebenfalls erfolgen, wenn auf eine Beharrungsphase oder eine Rollphase eine nochmalige Beschleunigungsphase folgt, in welcher eine höhere als die von den Motoren des zweiten Triebdrehgestells TDG2 bereitgestellten Zugkraft erforderlich ist. Auch bei einer beispielsweise von dem Triebzugführer angeforderten Beschleunigung können die Kupplungen K1, K2 des ersten Triebdrehgestells TDG1 entsprechend wieder geschlossen werden, um eine der Anforderung genügende Zugkraft bereitstellen zu können.

Sofern die Kupplungen K1, K2 ein Schließen während des Fahrbetriebs, beispielsweise aufgrund ihrer speziellen mechanischen Ausgestaltung, hingegen nicht ermöglichen, werden diese entsprechend erst im Stillstand des Triebzugs TZ wieder geschlossen, sodass für die üblicherweise anschließende nächste Beschleunigungsphase wieder alle Antriebsmotoren des Antriebssystems mit den Radsätzen der Triebdrehgestelle mechanisch verbunden sind.

Ein Öffnen und Schließen der Kupplungen K1, K2 kann mithin auch abhängig von beispielsweise einer Beladung bzw. Belastung des Triebzugs TZ erfolgen. So kann bei einer nur geringen Anzahl Fahrgaste und einem dadurch niedrigen Gewicht des Triebzugs TZ während des gesamten Fahrspiels einschließlich der Beschleunigungsphase die Kupplungen K1, K2 in dem ersten Triebdrehgestell TDG1 geöffnet und der erste Stromrichter WR1 gesperrt sein, sodass der Triebzug TZ ausschließlich mittels des zweiten Stromrichters WR2 und des zweiten Triebdrehgestells TDG2 angetrieben wird.

Eine höhere Flexibilität bezüglich der Steuerung der Antriebsleistung sowohl abhängig von einer Bewegungsphase als auch abhängig von beispielsweise einer Belastung des Schienenfahrzeugs und damit erzielbare höhere Effizienz des Antriebssystem kann entsprechend erzielt werden, wenn das Antriebssystem mehr als die beispielhaft angegebenen zwei Triebdrehgestelle und/oder mehr als die beispielhaft angegebenen zwei Stromrichter umfasst. Antriebsmotoren jeweils individuell von einem Stromrichter gespeist werden.

Bezugszeichen
- DGR: Drehgestellrahmen
- EW1, EW2: Endwagen
- FR: Fahrtrichtung
- G: Getriebe
- GR: Gleichrichter
- K1, K2: Kupplung
- LDG1, LDG2: Laufdrehgestell
- LT: Längsträger
- M1, M2: Motor
- MW, MW1, MW2: Mittelwagen
- PAN: Stromabnehmer
- QT: Querträger
- R: Rad
- RS: Radsatz
- RSW: Radsatzwelle
- SE: Schaltelemente
- ST: Steuereinrichtung
- TDG1, TDG2: Triebdrehgestell
- TF: Transformator
- TZ: Triebzug
- WK: Wagenkasten
- WR1, WR2: Wechselrichter
- ZK: Gleichspannungszwischenkreis

## Patentansprüche

1. Antriebssystem für ein Schienenfahrzeug (TZ), wobei das Antriebssystem zumindest aufweist:
- eine Mehrzahl Stromrichter (WR1, WR2) zum Speisen einer jeweiligen Anzahl Antriebsmotoren (M1, M2) mit elektrischer Energie,
- eine Mehrzahl Antriebsmotoren (M1, M2) zum Antreiben einer jeweiligen Radsatzwelle (RSW), wobei die Antriebsmotoren (M1, M2) ausschließlich als durchzugsbelüftete permanentmagneterregte Antriebsmotoren ausgestaltet sind,
- schaltbare Kupplungen (K1, K2), wobei zwischen jedem Antriebsmotor (M1, M2) und der von diesem angetriebenen Radsatzwelle (RSW) zumindest eine Kupplung (K1, K2) angeordnet ist, und
- eine Steuereinrichtung (ST) zum Steuern zumindest der Kupplungen (K1, K2).

2. Antriebssystem nach Anspruch 1, wobei
die Steuereinrichtung (ST) ausgestaltet ist, die Kupplungen (K1, K2) funktionsabhängig zu steuern.

3. Antriebssystem nach Anspruch 2, wobei
die Steuereinrichtung (ST) ausgestaltet ist, die Stromrichter (WR1, WR2) funktionsabhängig zu steuern.

4. Antriebssystem nach Anspruch 2 oder 3, wobei
die Steuereinrichtung (ST) ausgestaltet ist, die Kupplungen (K1, K2) situationsabhängig zu steuern.

5. Antriebssystem nach Anspruch 4, wobei
die Steuereinrichtung (ST) ausgestaltet ist, die Stromrichter (WR1, WR2) situationsabhängig zu steuern.

6. Antriebssystem nach einem der vorstehenden Ansprüche, wobei
jeder Antriebsmotor (M1, M2) die Radsatzwelle (RSW) direkt oder über ein einstufiges oder mehrstufiges Getriebe (G) antreibt, wobei die zumindest eine Kupplung (K1, K2) zwischen einer Motorwelle des Antriebsmotors (M1, M2) und der Radsatzwelle (RSW), zwischen der Motorwelle und einer Eingangswelle des Getriebes (G) oder, sofern das Getriebe (G) mehrstufig ist, zwischen einer ersten und einer zweiten Stufe des Getriebes (G) angeordnet ist.

7. Schienenfahrzeug (TZ), aufweisend zumindest ein Antriebssystem nach einem der Ansprüche 1 bis 6.

8. Schienenfahrzeug (TZ) nach Anspruch 7, welches als eine Lokomotive oder ein Triebzug, insbesondere für den lokalen, regionalen oder überregionalen Personentransport, ausgestaltet ist.

9. Verfahren zum Steuern eines Antriebssystems eines Schienenfahrzeugs (TZ), wobei
das Antriebssystem zumindest aufweist:
- eine Mehrzahl Stromrichter (WR1, WR2) zum Speisen einer jeweiligen Anzahl Antriebsmotoren (M1, M2) mit elektrischer Energie,
- eine Mehrzahl Antriebsmotoren (M1, M2) zum Antreiben einer jeweiligen Radsatzwelle (RSW), wobei die Antriebsmotoren (M1, M2) ausschließlich als durchzugsbelüftete permanentmagneterregte Antriebsmotoren ausgestaltet sind,
- schaltbare Kupplungen (K1, K2), wobei zwischen jedem Antriebsmotor (M1, M2) und der von diesem angetriebenen Radsatzwelle (RSW) zumindest eine Kupplung (K1, K2) angeordnet ist, und
- eine Steuereinrichtung (ST),
und wobei
zumindest die Kupplungen (K1, K2) von der Steuereinrichtung (ST) funktionsabhängig gesteuert werden.

10. Verfahren nach Anspruch 9, wobei
die Kupplungen (K1, K2) situationsabhängig von der Steuereinrichtung (ST) gesteuert werden.

11. Verfahren nach Anspruch 9 oder 10, wobei
die Stromrichter (WR1, WR2) funktionsabhängig und/oder situationsabhängig von der Steuereinrichtung (ST) gesteuert werden.

12. Verwendung eines Antriebssystems eines Schienenfahrzeugs (TZ) nach einem der Ansprüche 1 bis 6 zur Steuerung einer Antriebsleistung des Antriebssystems mittels der schaltbaren Kupplungen (K1, K2).
